# EUROPÄISCHE PATENTSCHRIFT

(11) **EP 3 559 524 B1**
(45) Veröffentlichungstag und Bekanntmachung des Hinweises auf die Patenterteilung: **13.03.2024**
(21) Anmeldenummer: 17816763.1
(22) Anmeldetag: 13.12.2017
(51) Int. Cl.: F16K 39/02, F16K 31/06, F02B 37/16

(54) **VENTIL**
VALVE
VANNE

(30) Priorität: 22.12.2016 DE 102016226098
(43) Veröffentlichungstag der Anmeldung: 30.10.2019
(73) Patentinhaber: Vitesco Technologies GmbH, 93055 Regensburg (DE)
(72) Erfinder: BONANNO, Rosario, 65812 Bad Soden (DE)
(74) Vertreter: Vitesco Technologies
(86) Internationale Anmeldenummer: PCT/EP2017/082644
(87) Internationale Veröffentlichungsnummer: WO 2018/114530

(56) Entgegenhaltungen:
- WO-A1-2006/029814
- WO-A1-2016/162968
- WO-A1-2018/114525
- WO-A1-2018/114529
- WO-A1-2018/114616
- WO-A1-2018/114644
- DE-A1- 10 048 499
- DE-A1-102013 220 685
- DE-A1-102014 226 885
- DE-B3-102012 224 131
- DE-B3-102014 113 540
- DE-U1- 9 409 028
- US-A1- 2001 002 041

## Beschreibung

Gegenstand der Erfindung ist ein Ventil gemäß dem Oberbegriff von Anspruch 1.

Solche Ventile werden unter anderem als Schubumluftventil am Turbolader in Kraftfahrzeugen eingesetzt, um im Schubbetrieb einen Bypass zur Saugseite freizugeben und sind somit bekannt. Um ein zu starkes Abbremsen des Turboladers zu verhindern, aber auch ein schnelles Anfahren zu gewährleisten, ist ein schnelles Öffnen und Schließen des Ventils eine wesentliche Voraussetzung. Der Ventilsitz wird vom Gehäuse des Turboladers gebildet, an dem das Ventil angeflanscht wird. Zur Abdichtung des Ventils ist im Gehäuse eine Dichtung angeordnet. Diese umgibt das zweite Gehäuseteil, welches mittels einer Rastverbindung mit dem Gehäuse verbunden. Das aus Gewichtsgründen aus Kunststoff bestehende zweite Gehäuseteil muss für eine ausreichende Festigkeit sowie herstellungsbedingt eine gewisse Struktur und Wandstärke aufweisen. Das erfordert einen entsprechenden Bauraum. Zudem muss die das zweite Gehäuseteil umgebende Dichtung mit einem entsprechenden Durchmesser ausgebildet werden. Derartige Ventile sind daher nur bedingt an verschiedene Einbauräume anpassbar.

Die Druckschrift DE 10 2014 113 540 B3 offenbart ein Schubumluftventil für einen Verdichter eines Verbrennungsmotors.

Der Erfindung liegt daher die Aufgabe zugrunde, ein Ventil zu schaffen, welches von seinem Aufbau den Einsatz in unterschiedlichen Einbauorten ermöglicht.

Gelöst wird die Aufgabe durch ein Ventil mit den Merkmalen von Anspruch 1.

Die Ausbildung des zweiten Gehäuseteils aus Metall, hat den Vorteil, dass es gegenüber einem Kunststoffteil mit einer deutlich reduzierten Wandstärke aufgrund der höheren Festigkeit von Kunststoff ausgebildet werden kann. Die geringere Wandstärke ermöglicht bei gleichem Kolbendurchmesser einen kleineren Durchmesser des zweiten Gehäuseteils. Das Ventil ist damit in kleinere Öffnungen montierbar. Ebenso lässt sich die Dichtung im Durchmesser kleiner ausbilden, was zu einer verbesserten Abdichtung führt. Mit der Ausbildung des zweiten Gehäuseteils aus Metall wird zudem eine höhere Temperaturbeständigkeit erreicht, was ebenfalls den Einsatz unter bislang nicht möglichen Einsatzbedingungen erlaubt. Des Weiteren erlaubt ein metallisches zweites Gehäuseteil ein Verbinden mit dem Gehäuse über eine Rastverbindung oder andere Verbindungen.

Eine gute Beständigkeit gegenüber verschiedensten durchströmenden Medien und Mediengemischen, vorzugsweise Abgas eines Verbrennungsmotors, wird in einer vorteilhaften Ausgestaltung dadurch erreicht, dass das Metall ein Edelstahl, vorzugsweise ein Chrom-Nickel-Stahl ist.

Das zweite Gehäuseteil ist besonders kostengünstig als Tiefziehteil hergestellt. Die Formgebung des Gehäuseteils lässt sich in nur einem Arbeitsschritt ohne weitere Bearbeitungen erzielen.

Es hat sich gezeigt, dass für den Einsatz des Ventils in einem Kraftfahrzeug eine Wandstärke von 0,3 mm bis 3 mm, vorzugsweise von 0,5 mm bis 1 mm, des zweiten Gehäuseteils ausreichend ist, um eine ausreichende Festigkeit und damit einen sicheren Betrieb des Ventils zu gewährleisten.

Das zweite Gehäuseteil weist an seiner dem Gehäuse zugewandten Seite eine nach radial außen abstehende Kante auf. Mit der Kante lässt sich im Bedarfsfall eine definierte Anschlagsfläche zum Aufsetzen am Gehäuse erzeugen. Die Kante lässt sich zu dem besonders einfach und somit kostengünstig bei der Formgebung des zweiten Gehäuseteils mittels Tiefziehen erzeugen.

Die Dichtung ist an der Kante angeordnet, indem die Dichtung zumindest einen Bereich der Kante umgibt. Dadurch kann die Dichtung kostengünstig mit einem kleineren Durchmesser ausgebildet werden. Diese Anordnung erlaubt eine Fixierung der Dichtung ohne zusätzliche Elemente. Halteteile für die Dichtung können entfallen. Mit der Verbindung von Dichtung und zweitem Gehäuseteil wird die Montage verbessert, da die Dichtung nunmehr vormontierbar ist.

Eine unverlierbare Anordnung der Dichtung an dem zweiten Gehäuseteil wird dadurch erreicht, dass die Kante Ausnehmungen aufweist und die Dichtung diese Ausnehmungen durchdringt. In Abhängigkeit von den Betriebsbedingungen und dem Dichtungsmaterial kann die Kante 2 bis 20, vorzugsweise 3 bis 12, insbesondere 4 bis 8 Ausnehmungen besitzen.

In einer besonders einfachen Ausgestaltung sind die Ausnehmungen kreisförmig ausgebildet. Sofern die radiale Erstreckung der Kante begrenzt ist und/oder um einen ausreichenden Querschnitt des Dichtungsmaterials in den Ausnehmungen vorzusehen, können die Ausnehmungen entlang des Umfangs der Kante ausgedehnt sein, vorzugsweise oval oder kreisbogenförmig.

Um eine ausreichend mechanische Festigkeit der Kante zu gewährleisten, nehmen die Ausnehmungen gemäß einer anderen vorteilhaften Ausgestaltung nicht mehr als 30 %, vorzugsweise nicht mehr als 20 % der Fläche der Kante ein.

Eine besonders zuverlässige Abdichtung wird mit einer Dichtung aus Fluorkautschuk erreicht.

Gemäß einer weiteren Ausgestaltung ist das zweite Gehäuseteil durch eine Pressverbindung mit dem Gehäuse verbunden. Der Vorteil besteht darin, dass keine zusätzlichen Befestigungselemente notwendig sind. Zudem lässt sich das Gehäuse durch den Wegfall von Rastelemente wesentlich einfacher gestalten, was eine deutliche Kostenreduzierung bei der Herstellung des Gehäuses zur Folge hat.

In einer besonders einfachen Ausgestaltung besitzt das Gehäuse einen in Richtung zweites Gehäuseteil vorstehenden zylindrischen Abschnitt auf den das zweite Gehäuseteil aufgepresst ist. Diese Art der Verbindung nutzt die bereits vorhandene Geometrie der Bauteile für die Verbindung. Das Vorsehen eines zylindrischen Abschnitts am Gehäuse ist dabei mit geringem Aufwand verbunden. Für das Verpressen kann zudem die radial nach außen abstehende Kante des zweiten Gehäuseteils als Angriffspunkt für ein Presswerkzeug verwendet werden.

Die Pressverbindung lässt gemäß weiterer Ausgestaltung besonders prozesssicher ausführen, wenn die radial abstehende Kante des zweiten Gehäuseteils als Anschlag für das Gehäuse dient. Ebenso kann das zweite Gehäuseteil für die Pressverbindung einen anderen Durchmesser als im verbleibenden Bereich seiner Mantelfläche aufweisen. Dieser andere Durchmesser ist in vorteilhafter Weise größer als die verbleibende Mantelfläche. Mit einem größeren Durchmesser steht eine größere Fläche für die Pressverbindung zur Verfügung, was die Sicherheit gegen ein Lösen der Verbindung erhöht. Zum anderen ist das zweite Gehäuseteil dadurch leichter herstellbar, wenn sich der größere Durchmesser an die radial abstehende Kante anschließt oder in anderen Worten, wenn sich die Abmessungen des zweiten Gehäuseteils ausgehend vom größten Durchmesser ausschließlich verringern.

An einem Ausführungsbeispiel wird die Erfindung näher beschrieben. Es zeigt in
- Fig. 1: eine Schnittdarstellung eines Ventils nach dem Stand der Technik,
- Fig. 2: eine vergrößerte Schnittdarstellung eines erfindungsgemäßen Ventils,
- Fig. 3: eine Schnittdarstellung des zweiten Gehäuseteils und
- Fig. 4: Ausgestaltungen der Kante des zweiten Gehäuseteils.

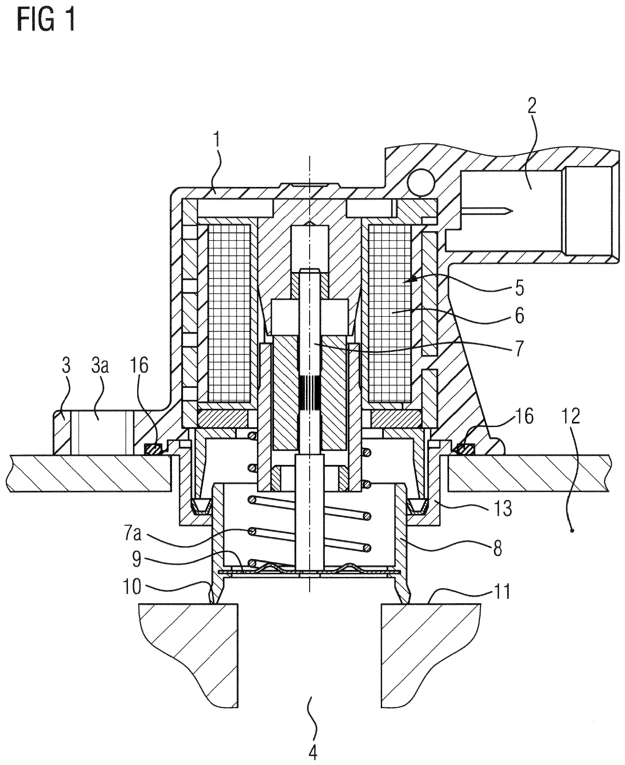

Figur 1 zeigt das Ventil, umfassend ein Gehäuse 1 mit einteilig angeformter Buchse 2 zum elektrischen Verbinden des Ventils. Das Gehäuse 1 besitzt weiter einen angeformten Flansch 3 und drei Bohrungen 3a, über die das Gehäuse 1 an einem nicht dargestellten Turbolader im Bereich der Bypassleitung 4 angeflanscht ist. In der gezeigten Einbaulage schließt sich an den Flansch 3 ein zweites Gehäuseteil 13 aus Kunststoff an. Das zweite Gehäuseteil 13 ist mittels einer Rastverbindung 14 mit dem Gehäuse 1 verbunden. In dem Gehäuse 1 ist ein Solenoid 5 mit einer Spule 6 und einem Metallstift 7 angeordnet. Der Metallstift 7 ist mit einem topfförmigen Kolben 8 verbunden, der am Umfang seines Bodens 9 eine axial abstehende ringförmige Dichtfläche 10 besitzt. In der gezeigten Schließstellung liegt die Dichtfläche 10 auf dem Ventilsitz 11 an, um die Bypassleitung 4 zu verschließen, so dass kein Medium von aus der Leitung 4 in die Leitung 12 strömen kann. Eine Feder 7a drückt dabei den Kolben 8 in Richtung Ventilsitz 11. Konzentrisch zum zweiten Gehäuseteil 13 ist im Gehäuse 1 ein das Ventil am Turbolader abdichtende Dichtung 16 in Form eines O-Rings im Gehäuse 1 angeordnet.

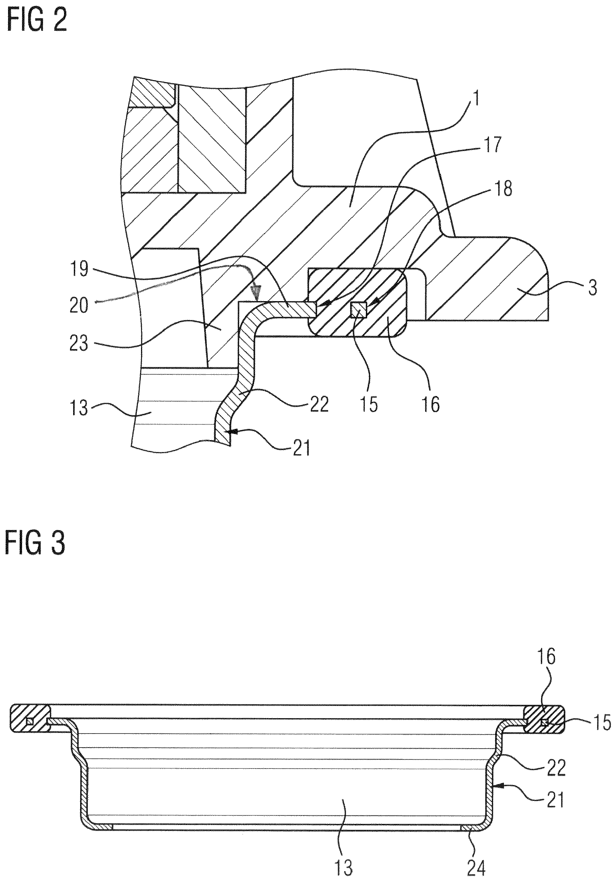

Das Ventil in Figur 2 besitzt im Wesentlichen den gleichen Aufbau wie das Ventil in Figur 1. Unterschiedlich ist das aus einem Chrom-Nickel-Stahl bestehende zweite Gehäuseteil 13 hat eine Wandstärke von 0,5 mm und ist ein Tiefziehteil. An seinem dem Gehäuse 1 zugewandten Ende besitzt das zweite Gehäuseteil 13 eine nach radial außen weisenden Kante 15. Die Kante weist zwölf gleichmäßig über den Umfang verteilte Ausnehmungen 17 auf, die von der aus einem Fluorkautschuk bestehenden Dichtung 16 durchdrungen werden, so dass die Dichtung 16 die radial abstehende Kante 15 in ihrem radial äußeren Bereich 18 umschließt. Der radial innere Bereich 19 der Kante 15 bildet eine Anschlagsfläche, mit der das zweite Gehäuseteil 13 an einer korrespondierenden Fläche 20 anliegt, wenn das zweite Gehäuseteil 13 mit dem Gehäuse 1 verpresst wird. Das zweite Gehäuseteil 13 besitzt eine zylinderförmige Mantelfläche 21, die zwei Durchmesser aufweist. Der größere Durchmesser 22 schließt sich dabei an die Kante 15 an. Dieser Bereich der zylindrischen Mantelfläche 21 bildet einen Teil der Pressverbindung, wobei gehäuseseitig ein zylindrischer Abschnitt 23, der einteilig am Gehäuse angeformt ist, den anderen Teil der Pressverbindung bildet.

Figur 3 zeigt das zweite Gehäuseteil 13 mit der Dichtung 16, die die Kante 15 umgibt, wobei die Dichtung 16 zur verliersicheren Anordnung am Gehäuseteil 13 in der Kante 15 ausgebildete Ausnehmungen 17 ausfüllt. An die radial abstehende Kante 15 schließt sich ein größerer Durchmesser 22 der zylindrischen Mantelfläche 21 an, die im weiteren Verlauf in einen kleineren Durchmesser übergeht. An seinem dem Gehäuse 1 abgewandten Ende weist das zweite Gehäuseteil 13 einen nach radial innen gerichteten Kragen 24. Der Kragen 24 kann beispielsweise der Anordnung einer weiteren Dichtung für den nicht dargestellten Kolben 8 dienen.

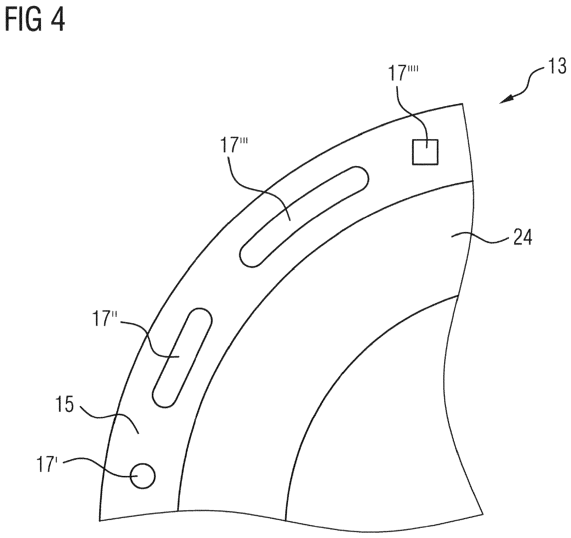

Figur 4 zeigt einen Ausschnitt des zweiten Gehäuseteils 13 mit der Kante 15 und dem Kragen 24. In der radial abstehenden Kante sind beispielhaft verschiedene Geometrien der Ausnehmungen dargestellt. So sind kreisförmige 17', ovale 17", bogenförmige 17‴ oder Ausnehmungen 17ʺʺ in Polygonform, vorzugsweise viereckig, möglich.

## Patentansprüche

1. Ventil mit einem Gehäuse (1), einem in dem Gehäuse (1) angeordneten Solenoid (5), einem von dem Solenoid (5) bewegbaren Stift und einem mit dem Stift verbundenen Kolben (8), wobei ein zweites Gehäuseteil (13) vorgesehen ist, welches an dem Gehäuse (1) anliegt und den Kolben (8) teilweise umgibt und einer Dichtung (16) zum Abdichten des Ventils, **dadurch gekennzeichnet, dass** das zweite Gehäuseteil (13) aus Metall besteht, dass das zweite Gehäuseteil (13) ein Tiefziehteil ist, dass die das Ventil abdichtende Dichtung (16) an seiner dem Gehäuse (1) zugewandten Seite angeordnet ist, dass das zweite Gehäuseteil (13) an seiner dem Gehäuse (1) zugewandten Seite eine nach radial außen abstehende Kante (15) aufweist, dass die Dichtung (16) an der Kante (15) angeordnet ist, indem die Dichtung (16) zumindest einen Bereich der Kante (15) umgibt und dass die Kante (15) Ausnehmungen (17) aufweist und die Dichtung (16) diese Ausnehmungen (17) durchdringt.

2. Ventil nach Anspruch 1, **dadurch gekennzeichnet, dass** das zweite Gehäuseteil (13) aus Edelstahl, vorzugsweise aus Chrom-Nickel-Stahl besteht.

3. Ventil nach zumindest einem der vorhergehenden Ansprüche, **dadurch gekennzeichnet, dass** das zweite Gehäuseteil (13) eine Wandstärke von 0,3 mm bis 3 mm, vorzugsweise von 0,5 mm bis 1 mm besitzt.

4. Ventil nach einem der vorherigen Ansprüche, **dadurch gekennzeichnet, dass** die Kante (15) 2 bis 20, vorzugsweise 3 bis 12, insbesondere 4 bis 8 Ausnehmungen (17) besitzt.

5. Ventil nach einem der vorherigen Ansprüche, **dadurch gekennzeichnet, dass** die Ausnehmungen (17) kreisförmig oder entlang des Umfangs der Kante (15) ausgedehnt sind.

6. Ventil nach zumindest einem der vorherigen Ansprüche, **dadurch gekennzeichnet, dass** die Ausnehmungen (17) nicht mehr als 30 %, vorzugsweise nicht mehr als 20 % der Fläche der Kante (15) einnehmen.

7. Ventil nach zumindest einem der vorhergehenden Ansprüche, **dadurch gekennzeichnet, dass** das zweite Gehäuseteil (13) mit dem Gehäuse (1), vorzugsweise einem zylindrischen Abschnitt (23) des Gehäuses (1) verpresst ist.

## Claims

1. Valve with a housing (1), a solenoid (5) which is arranged in the housing (1), a pin which can be moved by the solenoid (5), and a piston (8) which is connected to the pin, a second housing part (13) being provided which bears against the housing (1) and partially surrounds the piston (8), and a seal (16) for sealing the valve, **characterized in that** the second housing part (13) is composed of metal, **in that** the second housing part (13) is a deep-drawn part, **in that** the seal (16) which seals the valve is arranged on its side which faces the housing (1), **in that** the second housing part (13) has a radially outwardly projecting edge (15) on its side which faces the housing (1), **in that** the seal (16) is arranged on the edge (15), by the seal (16) surrounding at least one region of the edge (15), and **in that** the edge (15) has recesses (17) and the seal (16) penetrates these recesses (17) .

2. Valve according to Claim 1, **characterized in that** the second housing part (13) is composed of high-grade steel, preferably a chromium-nickel steel.

3. Valve according to at least one of the preceding claims, **characterized in that** the second housing part (13) has a wall thickness of from 0.3 mm to 3 mm, preferably of from 0.5 mm to 1 mm.

4. Valve according to one of the preceding claims, **characterized in that** the edge (15) has from 2 to 20, preferably from 3 to 12, in particular from 4 to 8 recesses (17).

5. Valve according to one of the preceding claims, **characterized in that** the recesses (17) are circular or are extended along the circumference of the edge (15).

6. Valve according to at least one of the preceding claims, **characterized in that** the recesses (17) account for no more than 30%, preferably no more than 20%, of the area of the edge (15).

7. Valve according to at least one of the preceding claims, **characterized in that** the second housing part (13) is pressed together with the housing (1), preferably a cylindrical portion (23) of the housing (1).

## Revendications

1. Vanne comprenant un boîtier (1), un solénoïde (5) agencé dans le boîtier (1), une tige apte à être déplacée par le solénoïde (5) et un piston (8) relié à la tige, une deuxième partie de boîtier (13) étant prévue, laquelle repose contre le boîtier (1) et entoure partiellement le piston (8), et un joint (16) destiné à assurer l'étanchéité de la vanne, **caractérisée en ce que** la deuxième partie de boîtier (13) est constituée de métal, **en ce que** la deuxième partie de boîtier (13) est une pièce emboutie, **en ce que** le joint (16) assurant l'étanchéité de la vanne est agencé sur son côté tourné vers le boîtier (1), **en ce que** la deuxième partie de boîtier (13) présente sur son côté tourné vers le boîtier (1) un bord (15) faisant saillie radialement vers l'extérieur, **en ce que** le joint (16) est agencé sur le bord (15), **en ce que** le joint (16) entoure au moins une zone du bord (15) et **en ce que** le bord (15) présente des évidements (17) et le joint (16) pénètre dans ces évidements (17).

2. Vanne selon la revendication 1, **caractérisée en ce que** la deuxième partie de boîtier (13) est en acier inoxydable, de préférence en acier au chrome-nickel.

3. Vanne selon au moins l'une des revendications précédentes, **caractérisée en ce que** la deuxième partie de boîtier (13) a une épaisseur de paroi de 0,3 mm à 3 mm, de préférence de 0,5 mm à 1 mm.

4. Vanne selon l'une des revendications précédentes, **caractérisée en ce que** le bord (15) présente de 2 à 20, de préférence de 3 à 12, en particulier de 4 à 8, évidements (17).

5. Vanne selon l'une des revendications précédentes, **caractérisée en ce que** les évidements (17) sont circulaires ou s'étendent le long de la périphérie du bord (15).

6. Vanne selon l'une au moins des revendications précédentes, **caractérisée en ce que** les évidements (17) n'occupent pas plus de 30%, de préférence pas plus de 20%, de la surface du bord (15).

7. Vanne selon au moins l'une des revendications précédentes, **caractérisée en ce que** la deuxième partie de boîtier (13) est sertie sur le boîtier (1), de préférence sur une portion cylindrique (23) du boîtier (1) .
